# EUROPÄISCHE PATENTSCHRIFT

(11) **EP 4 536 519 B1**
(45) Veröffentlichungstag und Bekanntmachung des Hinweises auf die Patenterteilung: **09.09.2026**
(21) Anmeldenummer: 23724709.3
(22) Anmeldetag: 02.05.2023
(51) Int. Cl.: B60T 8/1755, B60W 10/18, B60W 10/22, B60W 30/02, B60W 50/02, B60W 50/029, B60W 50/16, B62D 6/00, B62D 6/02, B62D 6/04

(54) **VERFAHREN ZUM BETREIBEN EINES FAHRZEUGES, COMPUTERPROGRAMMPRODUKT, SOWIE FAHRZEUG**
METHOD FOR OPERATING A VEHICLE, COMPUTER-PROGRAM PRODUCT, AND VEHICLE
PROCÉDÉ POUR FAIRE FONCTIONNER UN VÉHICULE, PRODUIT PROGRAMME D'ORDINATEUR ET VÉHICULE

(30) Priorität: 08.06.2022 DE 102022205846
(43) Veröffentlichungstag der Anmeldung: 16.04.2025
(73) Patentinhaber: VOLKSWAGEN AKTIENGESELLSCHAFT, 38440 Wolfsburg (DE)
(72) Erfinder: SCHMALBRUCH, Michael, 38302 Wolfenbüttel (DE)
(86) Internationale Anmeldenummer: PCT/EP2023/061527
(87) Internationale Veröffentlichungsnummer: WO 2023/237256

(56) Entgegenhaltungen:
- EP-A1- 3 825 197
- DE-A1- 102005 028 787
- DE-A1- 102010 010 856
- US-A1- 2018 273 006
- US-A1- 2021 370 943

## Beschreibung

Die Erfindung betrifft ein Verfahren zum Betreiben eines Fahrzeuges, ein Computerprogrammprodukt, sowie ein Fahrzeug.

Bei elektromechanischen Bremssystemen mit elektromechanischen Radbremsen kann es vorkommen, dass während eines Bremsvorgangs eine der Radbremsen unabhängig voneinander ausfallen. Dadurch kann es unter Umständen bei einem Bremsvorgang aufgrund der dann ungleichen Bremsmomentenverteilung an den jeweiligen Achsen zu einem Giermoment und/oder zu einem Schiefziehen des Fahrzeugs kommen. Dabei ist es bekannt, ein Gegensteuern durch einen Lenkeingriff dem Fahrer zu überlassen.

Um dies zu vermeiden, ist es aus dem Dokument US 2005/0057095 A1 bekannt, das Schiefziehen des Fahrzeuges durch ein asymmetrisches Bremsen und einen automatischen Eingriff am Lenkmittel vorzusehen. Dabei wird ein Lenkverhalten des Fahrers lediglich als Eingangsgröße betrachtet. Für das Fahrgefühl des Fahrers spielt neben dem Fahrverhalten des Fahrzeuges jedoch das Verhalten des Lenkrades ebenfalls eine große Rolle.

Aus den Dokumenten US 2018/0273006 A1 und US 2021/0370943 A1 sind weitere Verfahren zum Betrieb von Lenk- und Bremssystemen bekannt.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung, bei einem kritischen Zustand einer Bremseinheit in einer Fahrsituation einen zumindest teilweisen Ausgleich am Fahrwerk zu schaffen und gleichzeitig ein Fahrgefühl des Fahrers in der Fahrsituation zu verbessern.

Die voranstehende Aufgabe wird gelöst durch ein Verfahren mit den Merkmalen des Anspruchs 1, ein Computerprogrammprodukt mit den Merkmalen des Anspruchs 9, sowie ein Fahrzeug mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogrammprodukt und/oder dem erfindungsgemäßen Fahrzeug und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist ein Verfahren zum Betreiben eines Fahrzeuges vorgesehen. Das Fahrzeug umfasst ein Bediensystem, das zumindest ein Lenkmittel zum Ausführen einer Lenkbewegung durch einen Fahrer aufweist. Weiterhin umfasst das Fahrzeug ein Steuerungssystem für ein Fahrwerk des Fahrzeuges, das eine Bremsanlage mit zumindest einer Bremseinheit zum Aufbringen einer Bremskraft zum Abbremsen eines Rades des Fahrzeuges und eine zumindest teilweise oder vollständig vom Lenkmittel mechanisch entkoppelte Lenkeinheit zum Lenken des Fahrzeuges in Abhängigkeit von der Lenkbewegung aufweist. Das Verfahren umfasst, insbesondere in Form von Verfahrensschritten:
- Erkennen einer Fahrsituation, in welcher die Bremseinheit einen kritischen Zustand aufweist, welcher das Aufbringen der Bremskraft beeinflusst, insbesondere durch eine Kontrolleinheit des Fahrzeuges,
- Bestimmen eines Störmomentes in Abhängigkeit von der Fahrsituation, insbesondere durch die Kontrolleinheit,
- Bestimmen eines Steuerverhaltens des Lenkmittels in Abhängigkeit von der Fahrsituation, insbesondere durch die Kontrolleinheit,
- Ansteuern des Steuerungssystems in Abhängigkeit von dem Störmoment zur zumindest teilweisen oder vollständigen Kompensation des Störmomentes, insbesondere durch die Kontrolleinheit,
- Ansteuern des Lenkmittels in Abhängigkeit von dem Steuerverhalten, insbesondere durch die Kontrolleinheit.

Bei dem Fahrzeug kann es sich vorzugsweise um ein Kraftfahrzeug, z. B. in Form eines Elektrofahrzeuges, und/oder ein Luftfahrzeug handeln. Das Lenkmittel und die Lenkeinheit können vorteilhafterweise ein Steer-by-Wire-System bilden. Die Bremsanlage, insbesondere die Bremseinheit mit einem Bremsmittel des Bediensystems, kann ein Brake-by-Wire-System bilden.

Insbesondere kann das Lenkmittel in einem Fahrgastraum des Fahrzeuges angeordnet sein. Das Lenkmittel kann beispielsweise drehbar sein, um die Lenkbewegung auszuführen. Vorzugsweise kann das Lenkmittel ein Lenkrad umfassen.

Die Lenkeinheit kann beispielsweise eine Zahnstange und/oder einen Aktor zur Lenkung eines oder mehrerer Räder des Fahrzeuges umfassen. Insbesondere kann die Lenkeinheit fahrwerksseitig im Fahrzeug angeordnet sein. Das Lenkmittel und die Lenkeinheit können elektrisch und/oder elektronisch miteinander verbunden sein und/oder mittelbar oder unmittelbar miteinander in Kommunikationsverbindung stehen. Es ist denkbar, dass die Kontrolleinheit zwischen die Lenkeinheit und das Lenkmittel geschaltet ist.

Vorzugsweise weist die Bremseinheit mehrere, insbesondere gleichartige, Bremseinheiten auf, die paarweise gegenüberliegenden Rädern zugeordnet sind. Die Bremseinheit kann vorzugsweise eine elektrische Bremse umfassen. Dazu kann die Bremseinheit einen Aktor, insbesondere in Form eines Elektromotors, umfassen, durch welchen die Bremskraft zumindest in einem Normalzustand der Bremseinheit aufbringen kann. Dazu kann der Aktor z. B. mit einem Bremssattel und/oder einer Bremsscheibe der Bremseinheit wirken. Der kritische Zustand kann einen Defekt der Bremseinheit und/oder einer Kommunikationsverbindung der Bremseinheit umfassen. Im kritischen Zustand kann die Bremskraft der Bremseinheit, beispielsweise aufgrund eines Ausfalls des Aktors, reduziert oder nicht aufbringbar sein. Es ist jedoch ebenso denkbar, dass der Aktor aufgrund eines Defektes nicht vollständig in eine Ausgangsposition zurückbringbar ist. In diesem Fall kann eine erhöhte Bremskraft im kritischen Zustand vorliegen.

Beim Erkennen der Fahrsituation kann insbesondere der kritische Zustand der Bremseinheit detektiert werden. Dabei kann der kritische Zustand der Bremseinheit direkt an der Bremseinheit oder indirekt, z. B. durch eine Auswertung eines Fahrverhaltens des Fahrzeuges, erkannt werden. Das Störmoment kann ein Drehmoment umfassen, welches das Fahrzeug, insbesondere um eine Fahrzeughochachse, rotieren lässt. Beispielsweise kann es bei einem Bremsvorgang in Abhängigkeit von der aufgrund des kritischen Zustandes der Bremseinheit ungleichen Bremsmomentenverteilung an einer der Bremseinheit zugeordneten Achse zu dem Störmoment in Form eines Giermomentes und/oder eines Schiefziehens des Fahrzeugs kommen. Anhand der Fahrsituation, insbesondere anhand des kritischen Zustandes der Bremseinheit, kann das Störmoment berechnet werden.

Beim Ansteuern des Steuerungssystems in Abhängigkeit von der Fahrsituation kann vorgesehen sein, dass das Störmoment und/oder der kritische Zustand zumindest teilweise oder vollständig kompensiert wird. Beispielsweise kann das Störmoment beim Ansteuern des Steuerungssystems zumindest teilweise oder vollständig ausgeglichen werden, indem ein Gegenmoment am Fahrwerk erzeugt wird, welches einem Schiefziehen des Fahrzeuges entgegenwirkt.

Es kann vorgesehen sein, dass das anhand der Fahrsituation bestimmte Störmoment beim Bestimmen des Steuerverhaltens und/oder beim Ansteuern des Lenkmittels berücksichtigt wird. Das Steuerverhalten des Bediensystems kann eine haptische Rückmeldung an den Fahrer umfassen. Beispielsweise kann der Fahrer durch die haptische Rückmeldung auf den kritischen Zustand der Bremseinheit und/oder auf die Fahrsituation durch Ansteuern des Lenkmittels hingewiesen werden. Ferner kann vorgesehen sein, dass das Steuerverhalten situationsadäquat an die Fahrsituation angepasst wird. Insbesondere bei einer Geradeausfahrt ist es von Vorteil, beispielsweise ein Widerstandsverhalten des Lenkmittels gegenüber der Lenkbewegung anzupassen, um dem Fahrer bei einer darauffolgenden Kurvenfahrt den kritischen Zustand aufzuzeigen. Es ist jedoch ebenso denkbar, dass das Steuerverhalten einen Normalbetrieb des Lenkmittels umfasst, welcher insbesondere um das Störmoment bereinigt ist. Insbesondere, wenn sich das Fahrzeug beim Erkennen des kritischen Zustandes bereits in einer Kurvenfahrt befindet, kann dadurch verhindert werden, dass der Fahrer durch ein aufgrund des Störmomentes geändertes Steuerverhalten irritiert wird. Durch die zumindest teilweise Entkopplung der Lenkeinheit vom Lenkmittel wird das Lenkmittel beim Ansteuern in Abhängigkeit von dem Steuerverhalten unabhängig von der Lenkeinheit angesteuert. Es ist denkbar, dass zusätzlich zu einem Lenksteuerverhalten des Lenkmittels ein Bremssteuerverhalten des Bremsmittels bestimmt wird, um das Bremsmittel anhand des Bremssteuerverhaltens anzusteuern. Beispielsweise kann auch über das Bremsmittel eine haptische Rückmeldung zur Fahrsituation gegeben und/oder eine Bremskraftverstärkung und/oder ein Pedalwiderstand in Abhängigkeit von der Fahrsituation angepasst werden.

Durch die Ansteuerung des Steuerungssystems kann somit die Sicherheit des Fahrzeuges in der Fahrsituation verbessert werden, insbesondere indem das Störmoment zumindest teilweise oder vollständig in Bezug auf das Fahrverhalten des Fahrzeuges kompensiert wird. Durch die, insbesondere separate und/oder unabhängige, Ansteuerung des Bediensystems in Abhängigkeit von dem Steuerverhalten kann gleichzeitig ein Fahrkomfort und/oder eine Fahrsicherheit des Fahrers, vorzugsweise situationsadäquat, verbessert werden.

Im Rahmen der Erfindung ist es weiterhin denkbar, dass das Bestimmen des Störmomentes und/oder das Bestimmen des Steuerverhaltens in Abhängigkeit von der Lenkbewegung am Lenkmittel und/oder von einer Fahrervorgabe, insbesondere zur Definition einer Gesamtbremskraft der Bremsanlage, an einem Bremsmittel des Bediensystems erfolgt. Das Bremsmittel kann z. B. ein Bremspedal umfassen. Es ist denkbar, dass das Störmoment mit einem durch die Lenkbewegung initiierten Lenkmoment und/oder durch die Fahrervorgabe initiierten Bremsmoment verrechnet wird. Beispielsweise kann das Störmoment anhand des durch die Fahrervorgabe initiierten Bremsmomentes und/oder der durch die Lenkbewegung initiierten Lenkung des Fahrzeuges in Abhängigkeit von der Bremskraft der Bremseinheit ermittelt werden. Insbesondere kann es sich bei dem Störmoment um ein bei der Umsetzung der Fahrervorgabe und/oder der Lenkbewegung zu erwartendes Giermoment und/oder ein aufgrund der Fahrervorgabe bereits vorliegendes Giermoment handeln. Weiterhin kann das Steuerverhalten anhand der Lenkbewegung bestimmt werden, indem beispielsweise eine Steuerkurve eines Widerstandsverhaltens und/oder einer Lenkübersetzung für das Lenkmittel festgelegt wird. Somit kann eine Reaktion auf die Fahrsituation und/oder den kritischen Zustand ein Fahrerverhalten in der Fahrsituation berücksichtigen.

Es ist ferner bei einem erfindungsgemäßen Verfahren denkbar, dass das Steuerverhalten eine Lenkübersetzung zur Definition einer Kopplung zwischen der Lenkbewegung und einem Lenkverhalten der Lenkeinheit umfasst. Unter der Lenkübersetzung wird im Rahmen der vorliegenden Erfindung vorzugsweise eine, insbesondere elektronische, Kopplung zwischen dem Lenkmittel und der Lenkeinheit, verstanden. Beispielsweise kann bei einer elektronischen Kopplung vorgesehen sein, dass die Lenkeinheit eine Verstellung von Rädern des Fahrzeuges in einem durch die Lenkübersetzung definierten Verhältnis zur Lenkbewegung des Lenkmittels ausführt. Insbesondere kann durch die Lenkübersetzung eine Lenkunterstützung definiert sein. Beispielsweise kann beim Bestimmen des Steuerverhaltens eine Geschwindigkeit des Fahrzeuges zur Definition der Lenkübersetzung berücksichtigt werden. Dadurch, dass das Steuerverhalten die Lenkübersetzung umfasst, kann insbesondere in Abhängigkeit von der Fahrsituation beim Erkennen des kritischen Zustandes eine direkte oder indirektere Lenkung vorgegeben werden, um eine Gegenreaktion des Fahrers zu ermöglichen und/oder aufgrund der Kompensation des Störmomentes zu verhindern.

Weiterhin ist es bei einem erfindungsgemäßen Verfahren denkbar, dass das Steuerverhalten ein Korrekturverhalten umfasst, durch welches beim Ansteuern des Lenkmittels am Lenkmittel zur Beeinflussung der Lenkbewegung ein Korrekturmoment aufbringbar ist und/oder aufgebracht wird, insbesondere wobei durch das Korrekturverhalten die Lenkbewegung, vorzugsweise aktiv, entgegen dem Störmoment erleichtert und/oder in Richtung des Störmomentes erschwert wird. Das Korrekturmoment kann ein Widerstandsmoment des Lenkmittels umfassen, welches am Lenkmittel entgegen der Lenkbewegung aufgebracht wird. Dabei kann eine aktuelle Position des Lenkmittels berücksichtigt werden. Dadurch kann eine Gegenreaktion des Fahrers begünstigt werden. Beispielsweise kann vorgesehen sein, dass das Störmoment beim Ansteuern des Steuerungssystems das Störmoment nur teilweise oder nur temporär kompensiert wird. Durch das Korrekturverhalten kann dem Fahrer eine verbesserte Reaktion aufgezeigt werden. Weiterhin kann dem Fahrer durch das Korrekturverhalten ein Hinweis auf den kritischen Zustand gegeben werden. Insbesondere bei einer schnellen Kurvenfahrt kann dadurch intuitiv ein Fahrgefühl erzeugt werden, bei welchem der Fahrer feststellt, dass ein kritischer Zustand vorliegt und dadurch sein Fahrverhalten intuitiv anpasst. Vorzugsweise kann somit durch das Korrekturverhalten eine Abbildung des kritischen Zustands der Bremseinheit und/oder der Fahrsituation auf das Lenkmittel erzeugt werden. Gleichzeitig kann die Sicherheit des Fahrzeuges durch die zumindest teilweise Kompensation des Störmomentes sichergestellt sein.

Ferner kann bei einem erfindungsgemäßen Verfahren vorteilhafterweise vorgesehen sein, dass beim Ansteuern des Steuerungssystems die Bremsanlage und/oder die Lenkeinheit in Abhängigkeit von dem Störmoment angesteuert wird, um am Fahrwerk ein Gegenmoment zur zumindest teilweisen oder vollständigen Kompensation des Störmomentes aufzubringen. Die Kompensation kann beispielsweise durch einen asymmetrischen Bremsvorgang an der Bremsanlage erfolgen. Dazu können weitere Bremseinheiten der Bremsanlage, insbesondere an weiteren Rädern, mit einer Bremskraft angesteuert werden, die die Beeinflussung der Bremskraft der Bremseinheit im kritischen Zustand kompensiert. Ferner kann das Gegenmoment durch ein Gegenlenken an der Lenkeinheit aufgebracht werden. Es kann vorgesehen sein, dass anhand des Störmomentes die Differenz zwischen einem aktuellen Summenradbremsmoment und einem Soll-Summenradbremsmoment wird, um die Höhe eines zusätzlichen, insbesondere asymmetrischen, Radbremsmomentes zu bestimmen, welches an den noch im Normalzustand befindlichen Bremseinheiten der Bremsanlage aufgebracht wird. Dadurch kann insbesondere eine Wunschverzögerung des Fahrzeugs beibehalten oder im Wesentlichen beibehalten werden. Beim Ansteuern der Bremsanlage wird vorzugsweise eine Differenz des Radbremsmomentes an die im Normalzustand verbliebenen Bremseinheiten unter Berücksichtigung der Fahrzeugstabilität verteilt, um den asymmetrischen Bremsvorgang auszuführen.

Im Rahmen der Erfindung ist es weiterhin denkbar, dass zum Erkennen der Fahrsituation ein Diagnosevorgang ausgeführt wird, insbesondere bei welchem eine Kommunikationsverbindung zum Ansteuern der Bremseinheit in Hinblick auf den kritischen Zustand überwacht wird. Die Kommunikationsverbindung kann beispielsweise einen Daten-BUS umfassen. Beim Überwachen der Kommunikationsverbindung kann beispielsweise ein Datenabriss erkannt werden. Beispielsweise kann die Bremseinheit eine Platine aufweisen, durch welche Datenpakete an die Kontrolleinheit ausgebbar sind. Anhand eines Ausbleibens der Datenpakete von der Bremseinheit kann der kritische Zustand erkannt werden. Weiterhin ist es denkbar, dass über die Kommunikationsverbindung Zustandsinformationen, z. B. zur Spannungsversorgung, zur Bremskraft und/oder zu einer Temperatur der Bremseinheit, über einen Betrieb der Bremseinheit übermittelt werden. Anhand der Zustandsinformationen kann der kritische Zustand festgestellt werden. Ferner ist es denkbar, dass die Bremseinheit, z. B. anhand von Stromparametern zur Ansteuerung des Aktors, selbst den kritischen Zustand feststellt und insbesondere an die Kontrolleinheit des Fahrzeugs meldet. Insbesondere können somit beim Überwachen der Kommunikationsverbindung Fehlerwerte und/oder Fehlerinformationen von der Bremseinheit über die Kommunikationsverbindung empfangen werden. Beispielsweise kann beim Diagnosevorgang ein Status der einzelnen Bremseinheiten ermittelt und/oder abgefragt werden. Weiterhin ist es denkbar, dass Soll-Radbremsmomente und/oder Ist-Radbremsmomente von Rädern des Fahrzeuges beim Diagnosevorgang ermittelt und/oder abgefragt werden. Insbesondere anhand der Soll- Radbremsmomente und/oder der Ist-Radbremsmomente kann ferner unter Berücksichtigung des Fahrzeugmodells das Störmoment bestimmt werden. Somit kann der kritische Zustand durch den Diagnosevorgang insbesondere noch vor oder unmittelbar bei einem Bremswunsch des Fahrers festgestellt werden. Dadurch kann das Ansteuern des Steuerungssystems und/oder des Lenkmittels erfolgen, bevor die Fahrsituation selbst kritisch wird.

Weiterhin ist es bei einem erfindungsgemäßen Verfahren denkbar, dass zum Erkennen der Fahrsituation, insbesondere des kritischen Zustandes, ein Soll-Fahrverhalten des Fahrzeuges und ein Ist-Fahrverhalten des Fahrzeuges bestimmt wird, vorzugsweise wobei das Erkennen des kritischen Zustandes in Abhängigkeit von einem Vergleich des Soll-Fahrverhaltens und des Ist-Fahrverhaltens erfolgt. Das Soll-Fahrverhalten und das Ist-Fahrverhalten kann in und/oder vor der Fahrsituation ausgewertet werden, um die Fahrsituation und/oder den kritischen Zustand zu erkennen. Beispielsweise kann eine Soll-Trajektorie des Fahrzeuges, insbesondere anhand der Lenkbewegung, berechnet und eine Ist-Trajektorie, insbesondere anhand von Sensordaten einer Fahrzeugsensorik, erfasst werden. Beim Erkennen der Fahrsituation und/oder beim Bestimmen des Störmomentes kann ein Vergleich der Soll-Trajektorie und der Ist-Trajektorie erfolgen, um den kritischen Zustand und/oder das Störmoment anhand einer Abweichung zwischen der Soll-Trajektorie und der Ist-Trajektorie zu erkennen.

Vorzugsweise kann bei einem erfindungsgemäßen Verfahren vorgesehen sein, dass das Erkennen der Fahrsituation, das Bestimmen des Störmomentes und/oder das Ansteuern des Steuerungssystems in Abhängigkeit von einem Fahrzeugmodell mit fahrzeugspezifischen Eigenschaften erfolgt. Das Fahrzeugmodell kann statische und/oder dynamische Eigenschaften des Fahrzeuges, insbesondere in Hinblick auf die Fahrsituation, umfassen. Beispielsweise kann das Fahrzeugmodell eine Eigenlenkung des Fahrzeugs, ein Einspurmodell des Fahrzeuges, Masseeigenschaften, wie z. B. einen Schwerpunkt und/oder eine Schwerpunktverteilung des Fahrzeuges, eine Fahrzeuggeometrie und/oder eine Radgeometrie, wie z. B. einen Radradius, umfassen. Durch das Fahrzeugmodell kann das Ansteuern des Steuerverhaltens individuell auf das Fahrzeug und/oder die Fahrsituation abgestimmt sein. Beispielsweise kann das Störmoment durch die Berücksichtigung des Fahrzeugmodells auch in komplexen Fahrsituationen mit einer hohen Genauigkeit bestimmt werden, insbesondere um eine möglichst vollständige Kompensation des Störmomentes durch das Gegenmoment zu ermöglichen. Dadurch kann die Sicherheit in der Fahrsituation verbessert werden.

Gemäß einem weiteren Aspekt der Erfindung ist ein Computerprogrammprodukt vorgesehen, das Befehle umfasst, die bei einer Ausführung durch eine Kontrolleinheit die Kontrolleinheit veranlassen, ein erfindungsgemäßes Verfahren auszuführen.

Somit bringt ein erfindungsgemäßes Computerprogrammprodukt die gleichen Vorteile mit sich, wie sie bereits ausführlich mit Bezug auf ein erfindungsgemäßes Verfahren beschrieben worden sind. Bei dem Verfahren kann es sich insbesondere um ein computerimplementiertes Verfahren handeln. Das Computerprogrammprodukt kann als computerlesbarer Anweisungscode implementiert sein. Ferner kann das Computerprogrammprodukt auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Ferner kann das Computerprogrammprodukt in einem Netzwerk wie beispielsweise dem Internet bereitstellbar oder bereitgestellt sein, von dem es bei Bedarf von einem Nutzer heruntergeladen oder online ausgeführt werden kann. Das Computerprogrammprodukt kann sowohl mittels einer Software, als auch mittels einer oder mehrerer spezieller elektronischer Schaltungen, d.h. in Hardware oder in beliebig hybrider Form, d.h. mittels Software-Komponenten und Hardware-Komponenten, realisiert sein.

Gemäß einem weiteren Aspekt der Erfindung ist ein Fahrzeug vorgesehen. Das Fahrzeug weist ein Bediensystem auf, das zumindest ein Lenkmittel zum Ausführen einer Lenkbewegung durch einen Fahrer aufweist. Weiterhin umfasst das Fahrzeug ein Fahrwerk mit einem Steuerungssystem, das eine Bremsanlage mit zumindest einer Bremseinheit zum Aufbringen einer Bremskraft zum Abbremsen eines Rades des Fahrzeuges und eine zumindest teilweise vom Lenkmittel mechanisch entkoppelte Lenkeinheit zum Lenken des Fahrzeuges in Abhängigkeit von der Lenkbewegung aufweist. Ferner weist das Fahrzeug eine Kontrolleinheit zum Ausführen eines erfindungsgemäßen Verfahrens auf.

Somit bringt ein erfindungsgemäßes Fahrzeug die gleichen Vorteile mit sich, wie sie bereits ausführlich mit Bezug auf ein erfindungsgemäßes Verfahren und/oder ein erfindungsgemäßes Computerprogrammprodukt beschrieben worden sind. Die Kontrolleinheit kann einen Prozessor und/oder einen Mikroprozessor umfassen. Ferner kann die Kontrolleinheit zumindest teilweise oder vollständig in ein zentrales Steuergerät des Fahrzeuges integriert sein. Es ist jedoch ebenfalls denkbar, dass die Kontrolleinheit zumindest teilweise oder vollständig in ein oder mehrere dezentrale Steuergeräte integriert ist. Beispielsweise kann die Kontrolleinheit in ein Lenk- und/oder Bremsensteuergerät des Steuerungssystems integriert sein. Es kann vorgesehen sein, dass das Störmoment im Bremsensteuergerät und/oder im Lenkungssteuergerät ermittelt wird. Ferner kann im Lenkungssteuergerät anhand des Störmomentes ein Offset-Lenkwinkel ermittelt werden, der mit dem vom Fahrer anhand der Lenkbewegung, d. h. insbesondere der Position des Lenkmittels, eingestellten Lenkwinkel verrechnet wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen schematisch:
- Figur 1: ein erfindungsgemäßes Fahrzeug zum Ausführen eines erfindungsgemäßen Verfahrens,
- Figur 2: das Verfahren in schematischer Darstellung von Verfahrensschritten, und
- Figur 3: ein Lenkmittel des Fahrzeuges mit einem Steuerverhalten.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

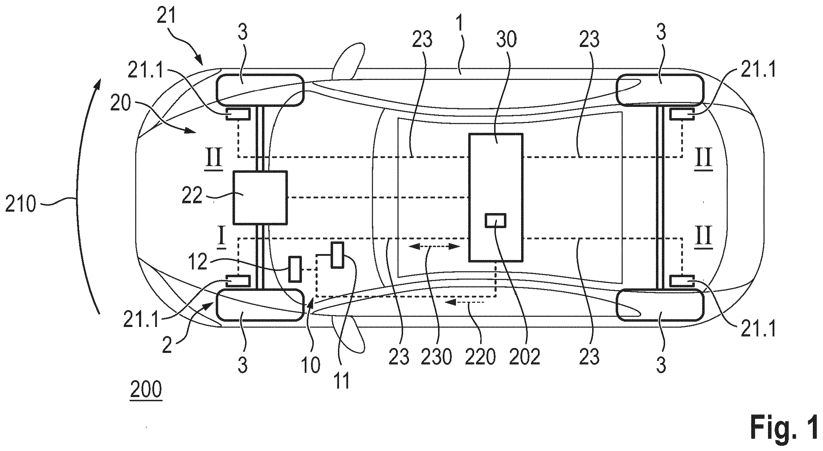

Figur 1 zeigt ein erfindungsgemäßes Fahrzeug 1 in einem ersten Ausführungsbeispiel. Dabei umfasst das Fahrzeug 1 ein Bediensystem 10, das zumindest ein Lenkmittel 11, insbesondere in Form eines Lenkrades zum Ausführen einer Lenkbewegung 201 durch einen Fahrer, und ein Bremsmittel 12, insbesondere in Form eines Bremspedals, zum Erfassen einer Fahrervorgabe für einen Bremsvorgang aufweist. Weiterhin weist das Fahrzeug 1 ein Fahrwerk 2 mit einem Steuerungssystem 20 zum Steuern des Fahrwerks 2 auf. Das Steuerungssystem 20 umfasst eine Bremsanlage 21 mit mehreren Bremseinheiten 21.1, die jeweils einem Rad 3 des Fahrwerkes 2 zugeordnet sind. Jede der Bremseinheiten 21.1 ist zum Aufbringen einer Bremskraft zum Abbremsen des zugeordneten Rades 3 ausgebildet. Beispielsweise können die Bremseinheiten 21.1 jeweils einen Aktor zum Aufbringen der Bremskraft umfassen. Das Bremsmittel 12 und die Bremseinheiten 21.1 bilden insbesondere ein Brake-by-Wire-System. Das Steuerungssystem 20 umfasst ferner eine zumindest teilweise vom Lenkmittel 11 mechanisch entkoppelte Lenkeinheit 22 zum Lenken des Fahrzeuges 1 in Abhängigkeit von der Lenkbewegung 201. Das Lenkmittel 11 und die Lenkeinheit 22 bilden vorzugsweise ein Steer-by-Wire-System.

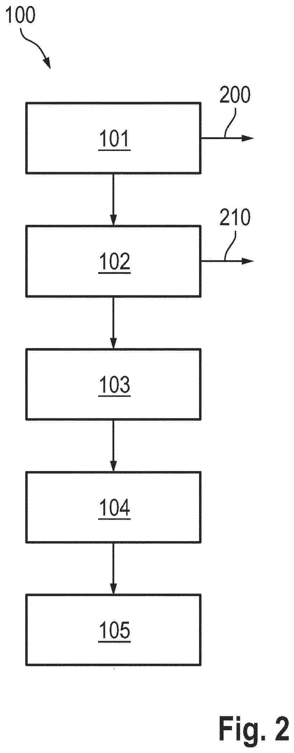

Weiterhin umfasst das Fahrzeug 1 eine Kontrolleinheit 30 zum Ausführen eines erfindungsgemäßen Verfahrens 100 zum Betreiben eines Fahrzeuges 1, wie in Figur 2 schematisch in Form einer Abfolge von Verfahrensschritten dargestellt. Vorzugsweise ist ein Computerprogrammprodukt vorgesehen, das Befehle umfasst, die bei einer Ausführung durch die Kontrolleinheit 30, die Kontrolleinheit 30 veranlassen, das Verfahren 100 auszuführen.

Das Verfahren 100 umfasst ein Erkennen 101 einer Fahrsituation 200, in welcher zumindest eine der Bremseinheiten 21.1 einen kritischen Zustand I aufweist, welcher das Aufbringen der Bremskraft beeinflusst. Dazu kann beispielsweise ein Soll-Fahrverhalten des Fahrzeuges 1 und ein Ist-Fahrverhalten des Fahrzeuges 1, insbesondere in Abhängigkeit von einem Fahrzeugmodell 202, bestimmt werden. Um den kritischen Zustand I festzustellen, kann bei einem Vergleich des Soll-Fahrverhaltens und des Ist-Fahrverhaltens bestimmt werden, ob eine Abweichung des Soll-Fahrverhaltens und des Ist-Fahrverhaltens außerhalb einer Regelungstoleranz liegt. Vorzugsweise wird zum Erkennen 101 der Fahrsituation 200 ein Diagnosevorgang 230 ausgeführt, bei welchem eine oder mehrere Kommunikationsverbindungen 23 zum Ansteuern der Bremseinheiten 21.1 in Hinblick auf den kritischen Zustand I überwacht wird. Die Kommunikationsverbindung 23 kann beispielsweise eine elektrisch leitende und/oder drahtlose Verbindung umfassen. Insbesondere kann über die Kommunikationsverbindung 23 ein Signalaustausch zwischen der Kontrolleinheit 30 und den Bremseinheiten 21.1 erfolgen. Reißt ein Kommunikationssignal ab oder überträgt eine Fehlermeldung, kann auf den kritischen Zustand I der jeweiligen Bremseinheit 21.1 geschlossen werden.

Im kritischen Zustand I kann die Bremskraft reduziert, ausgefallen oder überhöht sein. Wenn beispielsweise, wie in Figur 1 dargestellt, die Bremseinheit 21.1 des vorderen linken Rades 3, den kritischen Zustand I aufweist und eine geringere Bremskraft aufbringen kann, als durch die übrigen Bremseinheiten 21.1, die sich hier in einem Normalzustand II befinden, kann dadurch ein Störmoment 210 in Form eines Giermomentes und/oder eines Schiefziehens des Fahrzeuges 1, um das gegenüberliegende, hier stärker abgebremste Rad 3, initiiert werden. Bei dem Verfahren 100 erfolgt daher ein Bestimmen 102 des Störmomentes 210 in Abhängigkeit von der Fahrsituation 200 und dem Fahrzeugmodell 202. Durch das Fahrzeugmodell 202 können Parameter eines Fahrverhaltens des Fahrzeuges 1 bereitgestellt werden. Beispielsweise kann das Fahrzeugmodell 202 in der Kontrolleinheit 30 abgespeichert sein. Insbesondere, wenn der kritische Zustand I anhand des Diagnosevorgangs 230 erfasst wird, kann das Fahrzeugmodell 202 zur Vorhersage des Störmomentes 210 dienen, ohne dass es notwendig ist, das Ist-Fahrverhalten des Fahrzeuges 1 zu erfassen. Weiterhin ist es denkbar, dass beim Bestimmen 102 des Störmomentes 210 die Lenkbewegung 201 am Lenkmittel 11 und/oder die Fahrervorgabe am Bremsmittel 12 berücksichtigt wird, um die Soll-Trajektorie des Fahrzeuges 1 zumindest teilweise beizubehalten.

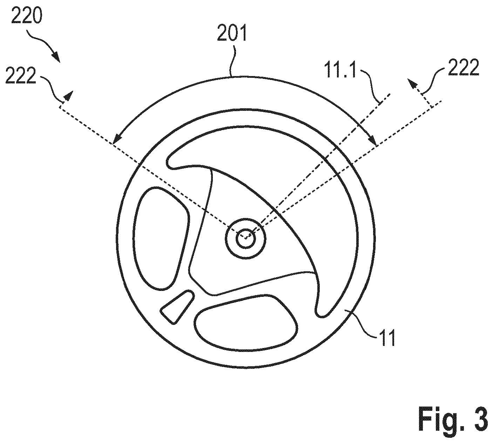

Weiterhin erfolgt bei dem Verfahren 100 ein Bestimmen 103 eines Steuerverhaltens 220 des Lenkmittel 11, und vorzugsweise des Bremsmittels 12, in Abhängigkeit von der Fahrsituation 200. Das Steuerverhalten 220 des Lenkmittels 11 kann beispielsweise eine Lenkübersetzung zur Definition einer Kopplung zwischen der Lenkbewegung 201 und einem Lenkverhalten der Lenkeinheit 22 umfassen. Weiterhin kann eine Definition einer Bremskraftverstärkung am Bremsmittel 12 festgelegt werden. Ferner kann das Steuerverhalten 220, wie in Figur 3 gezeigt, ein Korrekturverhalten 222 umfassen, durch welches bei einem Ansteuern 105 des Lenkmittels 11 am Lenkmittel 11 zur Beeinflussung der Lenkbewegung 201 ein Korrekturmoment, insbesondere in Abhängigkeit von der Lenkbewegung 201 am Lenkmittel 11 und/oder von der Fahrervorgabe, aufbringbar ist und/oder aufgebracht wird. Durch das Korrekturverhalten 222 wird, insbesondere in Abhängigkeit von einer Position 11.1 des Lenkmittels 11 bei der Lenkbewegung 201, die Lenkbewegung 201 entgegen dem Störmoment 210 erleichtert und/oder in Richtung des Störmomentes 210 erschwert wird.

Anschließend erfolgt ein Ansteuern 104 des Steuerungssystems 20 in Abhängigkeit von dem Störmoment 210 zur zumindest teilweisen Kompensation des Störmomentes 210 und das Ansteuern 105 des Lenkmittels 11 in Abhängigkeit von dem Steuerverhalten 220. Beispielsweise kann das Korrekturverhalten 222 ein Widerstandsmoment am Lenkmittel 11 umfassen, welches beim Ansteuern 105 des Lenkmittels 11 in Abhängigkeit von der Position 11.1 des Lenkmittels 11 am Lenkmittel 11 aufgebracht wird. Beim Ansteuern 104 des Steuerungssystems 20 wird die Bremsanlage 21 und/oder die Lenkeinheit 22 in Abhängigkeit von dem Störmoment 210 und/oder dem Fahrzeugmodell 202 angesteuert, um am Fahrwerk 2 ein Gegenmoment zur zumindest teilweisen Kompensation des Störmomentes 210 aufzubringen. Beispielsweise können die im Normalzustand II funktionierenden Bremseinheiten 21.1 asymmetrisch verteilte Bremskräfte aufbringen und/oder durch die Lenkeinheit 22 ein Gegenlenken ausgeführt werden.

Durch die Ansteuerung 104 des Steuerungssystems 20 kann somit die Sicherheit des Fahrzeuges 1 in der Fahrsituation 200 verbessert werden, indem das Störmoment 210 zumindest teilweise oder vollständig in Bezug auf das Fahrverhalten des Fahrzeuges 1 kompensiert wird. Durch die, insbesondere von der Ansteuerung 104 des Steuerungssystems 20 separate und/oder unabhängige, Ansteuerung 105 des Lenkmittels 11 in Abhängigkeit von dem Steuerverhalten 220 kann gleichzeitig ein Fahrkomfort und/oder eine Fahrsicherheit des Fahrers, vorzugsweise situationsadäquat, verbessert werden, indem der Fahrer eine Rückmeldung und/oder Unterstützung zu der Fahrsituation 200 erfährt.

Die voranstehende Erläuterung der Ausführungsformen beschreibt die vorliegende Erfindung ausschließlich im Rahmen von Beispielen. Selbstverständlich können Änderungen vorgenommen werden, ohne den durch die Patentansprüche definierten Rahmen der vorliegenden Erfindung zu verlassen.

### Bezugszeichenliste

- 1: Fahrzeug
- 2: Fahrwerk
- 3: Rad

- 10: Bediensystem
- 11: Lenkmittel
- 11.1: Position von 11
- 12: Bremsmittel

- 20: Steuerungssystem
- 21: Bremsanlage
- 21.1: Bremseinheit
- 22: Lenkeinheit
- 23: Kommunikationsverbindung

- 30: Kontrolleinheit

- 100: Verfahren
- 101: Erkennen von 200
- 102: Bestimmen von 210
- 103: Bestimmen von 220
- 104: Ansteuern von 20
- 105: Ansteuern von 11

- 200: Fahrsituation
- 201: Lenkbewegung
- 202: Fahrzeugmodell

- 210: Störmoment
- 220: Steuerverhalten
- 222: Korrekturverhalten

- 230: Diagnosevorgang

- I: kritischer Zustand
- II: Normalzustand

## Patentansprüche

1. Verfahren (100) zum Betreiben eines Fahrzeuges (1) mit einem Bediensystem (10), das zumindest ein Lenkmittel (11) zum Ausführen einer Lenkbewegung (201) durch einen Fahrer aufweist, und einem Steuerungssystem (20) für ein Fahrwerk (2) des Fahrzeuges (1), das eine Bremsanlage (21) mit zumindest einer Bremseinheit (21.1) zum Aufbringen einer Bremskraft zum Abbremsen eines Rades (3) des Fahrzeuges (1) und eine zumindest teilweise vom Lenkmittel (11) mechanisch entkoppelte Lenkeinheit (22) zum Lenken des Fahrzeuges (1) in Abhängigkeit von der Lenkbewegung (201) aufweist, umfassend:
- Erkennen (101) einer Fahrsituation (200), in welcher die Bremseinheit (21.1) einen kritischen Zustand (I) aufweist, welcher das Aufbringen der Bremskraft beeinflusst,
- Bestimmen (102) eines Störmomentes (210) in Abhängigkeit von der Fahrsituation (200),
- Bestimmen (103) eines Steuerverhaltens (220) des Lenkmittels (11) in Abhängigkeit von der Fahrsituation (200),
- Ansteuern (104) des Steuerungssystems (20) in Abhängigkeit von dem Störmoment (210) zur zumindest teilweisen Kompensation des Störmomentes (210),
- Ansteuern (105) des Lenkmittels (11) in Abhängigkeit von dem Steuerverhalten (220),
**dadurch gekennzeichnet, dass** das Lenkmittel (11) beim Ansteuern (104) in Abhängigkeit von dem Steuerverhalten (220) durch die zumindest teilweise Entkopplung der Lenkeinheit (22) vom Lenkmittel (11) unabhängig von der Lenkeinheit (22) angesteuert wird.

2. Verfahren (100) nach Anspruch 1,
**dadurch gekennzeichnet,**
**dass** das Bestimmen (102) des Störmomentes (210) und/oder das Bestimmen (103) des Steuerverhaltens (220) in Abhängigkeit von der Lenkbewegung (201) am Lenkmittel (11) und/oder von einer Fahrervorgabe an einem Bremsmittel (12) des Bediensystems (10) erfolgt.

3. Verfahren (100) nach Anspruch 1 oder 2,
**dadurch gekennzeichnet,**
**dass** das Steuerverhalten (220) eine Lenkübersetzung zur Definition einer Kopplung zwischen der Lenkbewegung (201) und einem Lenkverhalten der Lenkeinheit (22) umfasst.

4. Verfahren (100) nach einem der vorhergehenden Ansprüche,
**dadurch gekennzeichnet,**
**dass** das Steuerverhalten (220) ein Korrekturverhalten (222) umfasst, durch welches beim Ansteuern (105) des Lenkmittels (11) am Lenkmittel (11) zur Beeinflussung der Lenkbewegung (201) ein Korrekturmoment aufbringbar ist und/oder aufgebracht wird, wobei durch das Korrekturverhalten (222) die Lenkbewegung (201) entgegen dem Störmoment (210) erleichtert und/oder in Richtung des Störmomentes (210) erschwert wird.

5. Verfahren (100) nach einem der vorhergehenden Ansprüche,
**dadurch gekennzeichnet,**
**dass** beim Ansteuern (104) des Steuerungssystems (20) die Bremsanlage (21) und/oder die Lenkeinheit (22) in Abhängigkeit von dem Störmoment (210) angesteuert wird, um am Fahrwerk (2) ein Gegenmoment zur zumindest teilweisen Kompensation des Störmomentes (210) aufzubringen.

6. Verfahren (100) nach einem der vorhergehenden Ansprüche,
**dadurch gekennzeichnet,**
**dass** zum Erkennen (101) der Fahrsituation (200) ein Diagnosevorgang (230) ausgeführt wird, bei welchem eine Kommunikationsverbindung (23) zum Ansteuern der Bremseinheit (21.1) in Hinblick auf den kritischen Zustand (I) überwacht wird.

7. Verfahren (100) nach einem der vorhergehenden Ansprüche,
**dadurch gekennzeichnet,**
**dass** zum Erkennen (101) der Fahrsituation (200) ein Soll-Fahrverhalten des Fahrzeuges (1) und ein Ist-Fahrverhalten des Fahrzeuges (1) bestimmt wird, wobei das Erkennen (101) des kritischen Zustandes (I) in Abhängigkeit von einem Vergleich des Soll-Fahrverhaltens und des Ist-Fahrverhaltens erfolgt.

8. Verfahren (100) nach einem der vorhergehenden Ansprüche,
**dadurch gekennzeichnet,**
**dass** das Erkennen (101) der Fahrsituation (200), das Bestimmen (102) des Störmomentes (210) und/oder das Ansteuern (104) des Steuerungssystems (20) in Abhängigkeit von einem Fahrzeugmodell (202) mit fahrzeugspezifischen Eigenschaften erfolgt.

9. Computerprogrammprodukt, umfassend Befehle, die bei einer Ausführung durch eine Kontrolleinheit (30) die Kontrolleinheit (30) veranlassen, ein Verfahren (100) nach einem der vorhergehenden Ansprüche auszuführen.

10. Fahrzeug (1) aufweisend
ein Bediensystem (10), das zumindest ein Lenkmittel (11) zum Ausführen einer Lenkbewegung (201) durch einen Fahrer aufweist,
ein Fahrwerk (2) mit einem Steuerungssystem (20), das eine Bremsanlage (21) mit zumindest einer Bremseinheit (21.1) zum Aufbringen einer Bremskraft zum Abbremsen eines Rades (3) des Fahrzeuges (1) und eine zumindest teilweise vom Lenkmittel (11) mechanisch entkoppelte Lenkeinheit (22) zum Lenken des Fahrzeuges (1) in Abhängigkeit von der Lenkbewegung (201) aufweist, und
eine Kontrolleinheit (30), die zum Ausführen eines Verfahrens (100) nach einem der Ansprüche 1 bis 8 eingerichtet ist.

## Claims

1. Method (100) for operating a vehicle (1) having an operating system (10) which has at least one steering means (11) for a steering movement (201) to be carried out by a driver, and having a control system (20) for a chassis (2) of the vehicle (1), which control system has a braking system (21) having at least one braking unit (21.1) for applying a braking force for braking a wheel (3) of the vehicle (1) and has a steering unit (22), which is at least partially mechanically decoupled from the steering means (11), for steering the vehicle (1) on the basis of the steering movement (201), the method comprising:
- detecting (101) a driving situation (200) in which the braking unit (21.1) has a critical condition (I) which influences the application of the braking force,
- determining (102) a disturbance torque (210) on the basis of the driving situation (200),
- determining (103) a control behavior (220) of the steering means (11) on the basis of the driving situation (200),
- controlling (104) the control system (20) on the basis of the disturbance torque (210) in order to at least partially compensate for the disturbance torque (210),
- controlling (105) the steering means (11) on the basis of the control behavior (220), **characterized in that**
the steering means (11), when controlled (104) on the basis of the control behavior (220), is controlled independently of the steering unit (22) due to the at least partial decoupling of the steering unit (22) from the steering means (11).

2. Method (100) according to claim 1,
**characterized in that**
the disturbance torque (210) is determined (102) and/or the control behavior (220) is determined (103) on the basis of the steering movement (201) at the steering means (11) and/or of a driver specification at a braking means (12) of the operating system (10).

3. Method (100) according to claim 1 or 2,
**characterized in that**
the control behavior (220) comprises a steering ratio to define a coupling between the steering movement (201) and a steering behavior of the steering unit (22).

4. Method (100) according to any of the preceding claims,
**characterized in that**
the control behavior (220) comprises a correction behavior (222) by means of which, when the steering means (11) is controlled (105), a correction torque can be and/or is applied at the steering means (11) to influence the steering movement (201), the correction behavior (222) facilitating the steering movement (201) against the disturbance torque (210) and/or making it more difficult in the direction of the disturbance torque (210).

5. Method (100) according to any of the preceding claims,
**characterized in that**
when the control system (20) is controlled (104), the braking system (21) and/or the steering unit (22) is controlled on the basis of the disturbance torque (210) in order to apply a counter-torque to the chassis (2) to at least partially compensate for the disturbance torque (210).

6. Method (100) according to any of the preceding claims,
**characterized in that**
to detect (101) the driving situation (200), a diagnostic process (230) is carried out in which a communication link (23) for controlling the braking unit (21.1) is monitored with regard to the critical condition (I).

7. Method (100) according to any of the preceding claims,
**characterized in that**
to detect (101) the driving situation (200), a target driving behavior of the vehicle (1) and an actual driving behavior of the vehicle (1) are determined, the critical state (I) being detected (101) on the basis of a comparison of the target driving behavior and the actual driving behavior.

8. Method (100) according to any of the preceding claims,
**characterized in that**
the driving situation (200) is detected (101), the disturbance torque (210) is determined (102) and/or the control system (20) is controlled (104) on the basis of a vehicle model (202) having vehicle-specific properties.

9. Computer program product comprising instructions which, when carried out by a control unit (30), cause the control unit (30) to carry out a method (100) according to any of the preceding claims.

10. Vehicle (1) having
an operating system (10) which has at least one steering means (11) for a steering movement (201) to be carried out by a driver,
a chassis (2) having a control system (20) which has a braking system (21) having at least one braking unit (21.1) for applying a braking force for braking a wheel (3) of the vehicle (1) and has a steering unit (22), which is at least partially mechanically decoupled from the steering means (11), for steering the vehicle (1) on the basis of the steering movement (201), and
a control unit (30) which is designed to carry out a method (100) according to any of claims 1 to 8.

## Revendications

1. Procédé (100) permettant de faire fonctionner un véhicule (1) comportant un système de manipulation (10) qui présente au moins un moyen de direction (11) pour la réalisation d'un mouvement de direction (201) par un conducteur, et un système de commande (20) pour un châssis (2) du véhicule (1) qui présente un agencement de freinage (21) comportant au moins une unité de freinage (21.1) pour l'application d'une force de freinage pour freiner une roue (3) du véhicule (1) et une unité de direction (22) au moins partiellement désolidarisée mécaniquement du moyen de direction (11) pour la direction du véhicule (1) en fonction du mouvement de direction (201), comprenant :
- la détection (101) d'une situation de conduite (200) dans laquelle l'unité de freinage (21.1) présente un état critique (I) qui influence l'application de la force de freinage,
- la détermination (102) d'un couple perturbateur (210) en fonction de la situation de conduite (200),
- la détermination (103) d'un comportement de commande (220) du moyen de direction (11) en fonction de la situation de conduite (200),
- la commande (104) du système de commande (20) en fonction du couple perturbateur (210) pour compenser au moins partiellement le couple perturbateur (210),
- la commande (105) du moyen de direction (11) en fonction du comportement de commande (220), **caractérisé en ce que**
lors de la commande (104) en fonction du comportement de commande (220), le moyen de direction (11) est commandé indépendamment de l'unité de direction (22) par la désolidarisation au moins partielle de l'unité de direction (22) du moyen de direction (11).

2. Procédé (100) selon la revendication 1,
**caractérisé en ce**
**que** la détermination (102) du couple perturbateur (210) et/ou la détermination (103) du comportement de commande (220) sont effectuées en fonction du mouvement de direction (201) au niveau du moyen de direction (11) et/ou d'une consigne du conducteur au niveau d'un moyen de freinage (12) du système de manipulation (10).

3. Procédé (100) selon la revendication 1 ou 2, **caractérisé en ce**
**que** le comportement de commande (220) comprend un rapport de direction permettant de définir un accouplement entre le mouvement de direction (201) et un comportement de direction de l'unité de direction (22).

4. Procédé (100) selon l'une des revendications précédentes,
**caractérisé en ce que** le comportement de commande (220) comprend un comportement de correction (222) au moyen duquel, lors de la commande (105) du moyen de direction (11), un couple de correction peut être appliqué et/ou est appliqué au moyen de direction (11) pour influencer le mouvement de direction (201), dans lequel, au moyen du comportement de correction (222), le mouvement de direction (201) est facilité à l'encontre du couple perturbateur (210) et/ou est entravé dans la direction du couple perturbateur (210).

5. Procédé (100) selon l'une des revendications précédentes,
**caractérisé en ce que**, lors de la commande (104) du système de commande (20), l'agencement de freinage (21) et/ou l'unité de direction (22) sont commandés en fonction du couple perturbateur (210) afin d'exercer sur le châssis (2) un couple résistant destiné à compenser au moins partiellement le couple perturbateur (210).

6. Procédé (100) selon l'une des revendications précédentes,
**caractérisé en ce que**, pour la détection (101) de la situation de conduite (200), un processus de diagnostic (230) est exécuté, au cours duquel une connexion de communication (23) pour la commande de l'unité de freinage (21.1) est surveillée en vue de détecter l'état critique (I).

7. Procédé (100) selon l'une des revendications précédentes,
**caractérisé en ce que**, pour la détection (101) de la situation de conduite (200), un comportement de conduite de consigne du véhicule (1) et un comportement de conduite réel du véhicule (1) sont déterminés, dans lequel la détection (101) de l'état critique (I) est effectuée en fonction d'une comparaison entre le comportement de conduite de consigne et le comportement de conduite réel.

8. Procédé (100) selon l'une des revendications précédentes,
**caractérisé en ce que** la détection (101) de la situation de conduite (200), la détermination (102) du couple perturbateur (210) et/ou la commande (104) du système de commande (20) sont effectuées en fonction d'un modèle de véhicule (202) comportant des caractéristiques spécifiques au véhicule.

9. Produit programme d'ordinateur, comprenant des instructions qui, lorsqu'elles sont exécutées par une unité de commande (30), amènent l'unité de commande (30) à exécuter un procédé (100) selon l'une des revendications précédentes.

10. Véhicule (1) présentant
un système de manipulation (10) qui présente au moins un moyen de direction (11) pour la réalisation d'un mouvement de direction (201) par un conducteur,
un châssis (2) comportant un système de commande (20) qui présente un agencement de freinage (21) comportant au moins une unité de freinage (21.1) pou l'application d'une force de freinage pour freiner une roue (3) du véhicule (1) et une unité de direction (22) au moins partiellement désolidarisée mécaniquement du moyen de direction (11) pour la direction du véhicule (1) en fonction du mouvement de direction (201), et
une unité de commande (30) qui est configurée pour l'exécution d'un procédé (100) selon l'une des revendications 1 à 8.
